# EUROPÄISCHE PATENTSCHRIFT

(11) **EP 0 939 985 B1**
(45) Veröffentlichungstag und Bekanntmachung des Hinweises auf die Patenterteilung: **10.10.2001**
(21) Anmeldenummer: 97950125.1
(22) Anmeldetag: 06.11.1997
(51) Int. Cl.: H02B 1/30, H02B 1/01

(54) **BAUSATZ FÜR EIN RAHMENGESTELL MIT ECKVERBINDUNG FÜR DIE VERTIKALEN RAHMENPROFILE**
KIT FOR A RACK WITH A CORNER CONNECTOR FOR VERTICAL FRAME PIECES
JEU DE PIECES POUR BAIE A ELEMENT D'ASSEMBLAGE D'ANGLE POUR MONTANTS PROFILES VERTICAUX

(30) Priorität: 19.11.1996 DE 19647803
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: BENNER, Rolf, D-35745 Herborn (DE); KÖHLER, Martina, D-35745 Herborn (DE); MÜNCH, Udo, D-35764 Sinn (DE); REUTER, Wolfgang, D-57299 Burbach 5 (DE)
(74) Vertreter: Fleck, Hermann-Josef, Dr.-Ing.
(86) Internationale Anmeldenummer: EP9706146
(87) Internationale Veröffentlichungsnummer: WO9823006

(56) Entgegenhaltungen:
- EP-A- 0 649 205
- DE-A- 1 938 879
- FR-A- 2 551 303
- GB-A- 2 231 117

## Beschreibung

Die Erfindung betrifft einen Schaltschrank mit einem Rahmengestell, das einen Boden- und einen Deckrahmen mit horizontalen Breiten- und Tiefenstreben und aufweist, wobei der Boden- und der Deckrahmen Eckaufnahmen aufweist, an die vertikale Rahmenprofile anschließbar sind, und wobei die vertikalen Rahmenprofile zum Innenraum des Rahmengestells gekehrte Profilteile aufweisen, wobei die vertikalen Rahmenprofile zumindest einer Seite des Rahmengestell an ihren Enden mit ihren Profilteilen in die Eckaufnahmen von der Außenseite des Rahmengestells her einschiebbar sind, und wobei die Profilteile an einen Verbinder der Eckaufnahme fixierbar sind.

Ein derartiger Schaltschrank ist aus der GB 2 231 117 bekannt. In diesem Dokument ist ein Schaltschrank mit einem Rahmengestell gezeigt, welches einen Boden- und Deckrahmen aufweist. Zur Verbindung des Boden- mit dem Deckrahmen sind vier im Querschnitt quadratische vertikale Rahmenprofile verwendet. Sowohl der Boden- als auch der Deckrahmen weisen in ihren Eckbereichen Ausklinkungen auf, die zur Außenseite des Schaltschrankes hin geöffnet sind. In diese Ausklinkungen können die längs-seitigen Enden der vertikalen Rahmenprofile eingestellt werden. In die vertikalen Rahmenprofile sind Eckverbinder eingeschweißt. Sie weisen eine Gewindeaufnahme auf, die vom Schaltschrankinnenraum her zugängig ist. Vom Schaltschrankinnenraum her kann eine Befestigungsschraube durch einen Durchbruch eines Befestigungsbleches hindurchgeführt und in die Gewindeaufnahme eingeschraubt werden. Auf diese Weise wird das vertikale Rahmenprofil mit dem Boden- bzw. dem Deckrahmen verspannt. Bei dieser Anordnung wird also das vertikale Rahmenprofil an einem dünnwandigen Blech gehalten. Insbesondere bei Schaltschränken, in dessen Innenraum schwere Einbauten am Rahmengestell befestigt werden, ist diese Art der Befestigung nicht immer ausreichend tragfähig. Des Weiteren erweist sich die exakte Ausrichtung des vertikalen Rahmenprofiles gegenüber dem Boden- bzw. Deckrahmen als schwierig.

Die FR 2 551 303 zeigt ein Rahmengestell für einen Schaltschrank mit einer Boden- und einer Deckel-Baugruppe. Die Boden- und die Deckel-Baugruppe sind aus einem Blech-Bauteil gefertigt. Sie weisen eine horizontale Abschlußwand auf, von der ein umlaufender Rand abgebogen ist. In den Eckbereichen dieses umlaufenden Randes sind Blechwinkel eingestellt und eingeschweißt. Diese Blechwinkel weisen Befestigungsaufnahmen auf, an denen vertikale Rahmenprofile angeschraubt werden können. Im Dachbereich ist dabei das vertikale Rahmenprofil von der Innenseite des Schaltschrankes her an den Eckverbinder angelegt. Das vertikale Rahmenprofil kann damit bei einem fertig montierten Rahmengestell nicht ohne Weiteres nachträglich ausgetauscht oder abgebaut werden. Dies wäre aber dann von Vorteil, wenn eine Nutzungsänderung im Schaltschrankinnenraum erfolgen soll oder die Zugänglichkeit für Montagearbeiten erhöht werden soll.

In der EP 06 492 05 A1 ist ein Rahmengestell eines Schaltschrankes offenbart, das einen aus horizontalen Tiefen- und Breitenstreben zusammengesetzten Boden- und einen Deckrahmen aufweist. Zur Verbindung der Tiefen- mit den Breitenstreben sind Eckstücke verwendet. Die Eckstücke bilden eine Außenaufnahme, an denen vertikale Rahmenprofile befestigt werden können. Hierzu sind an den vertikalen Rahmenprofilen endseitig Endstücke montiert. Die Endstücke können an Stützflächen des Endstückes angelegt werden. Die Befestigung des Endstückes an dem Eckstück erfolgt dann über Schraubverbindungen. Zur Befestigung des vertikalen Rahmenprofiles ist ein erheblicher Teile- und Montageaufwand erforderlich.

Es ist Aufgabe der Erfindung, einen Schaltschrank der im Oberbegriff des Patentanspruches 1 erwähnten Art zu schaffen, bei dem die vertikalen Rahmenprofile mit geringem Teile- und Montageaufwand einfach an das Rahmengestell an- bzw. von diesem abgebaut werden können.

Diese Aufgabe wird dadurch gelöst, daß die Profilteile an dem Verbinder angelegt sind, dass die vertikalen Rahmenprofile mit ihren flächig ausgebildeten Profilteilen eine zum Innenraum des Rahmengestells hinweisende, offene Außenaufnahme zur Aufnahme des Verbinders aufweisen, dass der Boden- und der Deckrahmen in ihren zur Außenseite des Rahmengestelles hin offenen Eckaufnahmen die Verbinder tragen, und dass die Verbinder zur Außenseite des Rahmengestelles weisende Anschläge aufweisen, an denen die flächig ausgebildeten Profilteile der vertikalen Rahmenprofile angelegt sind.

Die Eckaufnahme ist so ausgebildet, dass das vertikale Rahmenprofil an ein bereits stellfähig montiertes Rahmengestell an- bzw. von diesem abgebaut werden kann. Hierbei werden keine an das vertikale Rahmenprofil angebauten zusätzlichen Einzelteile benötigt, da eine Befestigung des Rahmenprofiles direkt an den Verbinder erfolgt. Über die flächigen Profilteile der Außenaufnahmen kann das vertikale Rahmenprofil an dem Verbinder ausgerichtet werden.

Eine mögliche Ausgestaltung der Erfindung sieht vor, dass die vertikalen Rahmenprofile auswechselbar mit den Verbindern verbunden sind. Hierbei ist denkbar, dass die vertikalen Rahmenprofile an ihren Enden mit einer oder mehreren Schraubaufnahmen versehen sind, die fluchtend zu Gewindeaufnahmen der Verbinder anordenbar sind, und dass in die von der Außenseite des Rahmengestelles her zugänglichen Schraubaufnahmen Befestigungsschrauben einführbar und in die Gewindeaufnahmen ein-schraubbar sind. Die Anbringung der vertikalen Rahmenprofile ist damit einfach möglich. Sie können bequem von der Außenseite des Rahmengestelles angeschraubt werden. An dieser Stelle sind die Befestigungsschrauben stets gut zugänglich.

Um eine gute Abstützung der vertikalen Rahmenprofile zu erreichen, ist eine. bevorzugte Ausgestaltung der Erfindung dadurch gekennzeichnet, dass die Verbinder über den Deck- bzw. den Bodenrahmen in axialer Richtung der vertikalen Rahmenprofile vorstehen und die vertikalen Rahmenprofile von der Stirnseite bis zum freien Ende des Verbinders abstützen.

Wenn vorgesehen ist, dass die Eckaufnahme eine ebene Aufstandsfläche aufweist, auf der der Verbinder und das stirnseitige Ende des vertikalen Rahmenprofiles aufgestellt sind, dann läßt sich das vertikale Rahmenprofil einfach zu den Befestigungsstellen des Verbinders ausrichten. Wenn die vertikalen Rahmenprofile mit dem Verbinder zu verschrauben sind, dann sind die entsprechenden Schraubaufnahmen und die Gewindeaufnahmen stets fluchtend zueinander angeordnet.

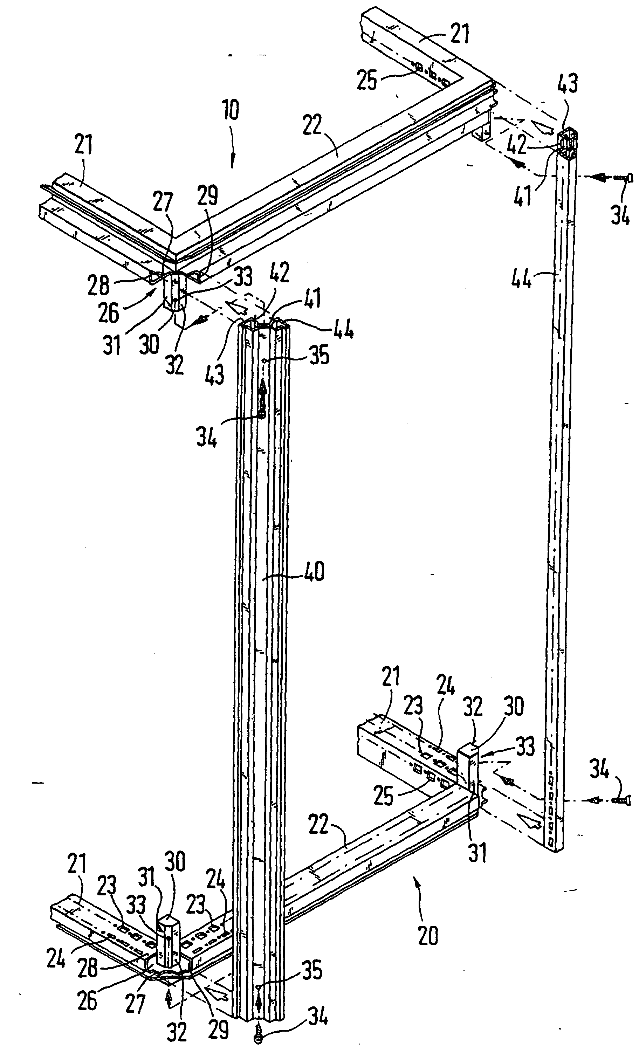

Die Erfindung wird im folgenden anhand eines in der Zeichnung dargestellten Ausführungsbeispieles näher erläutert.

In der einzigen Zeichnung ist ein Ausschnitt aus einem Rahmengestell für einen Schaltschrank in perspektivischer Darstellung gezeigt. Das Rahmengestell besitzt einen Deck- und einen Bodenrahmen 10 und 20. Diese beiden Baugruppen können identisch ausgebildet sein, so daß sie vertauscht werden können. Der Deck- und der Bodenrahmen 10 und 20 sind aus rechtwinklig zueinander verlaufenden Tiefen- und Breitenstreben 21 und 22 zusammengesetzt. Diese Tiefen- und Breitenstreben 21, 22 haben zwei zum Innenraum des Rahmengestelles gekehrte Profilseiten, die mit Reihen von Befestigungsaufnahmen 23, 24 und 25 versehen sind. Die Befestigungsaufnahmen 23, 24 und 25 sind hierbei zueinander beabstandet in gleicher Teilung eingebracht.

An den aneinanderstoßenden Enden der Tiefen- und Breitenstreben 21 und 22 sind Eckaufnahmen 26 ausgebildet. Die Eckaufnahmen 26 haben eine ebene Aufstandsfläche 27, auf die ein Verbinder 30 aufgestellt ist. Der Verbinder 30 ist im wesentlichen quaderförmig ausgebildet. An einer seiner vertikalen Enden ist er jedoch mit einer Schrägfläche versehen, in die eine oder mehrere Gewindeaufnahme 33 eingebracht sind. Die Schrägfläche weist zur Außenseite des Rahmengestelles hin. Zur Befestigung des Verbinders 30 ist dieser auf die Aufstandsfläche 27 aufgestellt. Mit seinen dem Innenraum des Schaltschrankes zugekehrten Seiten-flächen liegt er an den stirnseitigen Enden der Tiefen- und Breitenstreben 21, 22, die als Führungen 28, 29 dienen, an. In dieser Position kann der Verbinder 30 in die Eckaufnahme 26 eingeschweißt werden. Der Verbinder 30 ist hierbei- exakt rechtwinklig zu den zugeordneten Tiefen- und Breitenstreben 21 und 22 angeordnet. Die Führungen 28 und 29 sowie die Aufstandsfläche 27 bilden eine nach außen offene Aufnahme für das stirnseitige Ende eines vertikalen Rahmenprofiles 40. Das vertikale Rahmenprofil 40 besitzt eine zum Innenraum des Rahmengestelles gekehrte offene Außenaufnahme. Diese Außenaufnahme ist von zwei Profilteilen 41, 42 begrenzt. Die Profilteile 41, 42 verlaufen flächig in Längsrichtung des Rahmenprofiles 40. Sie stehen rechtwinklig zueinander.

Bei montiertem vertikalem Rahmenprofil 40 liegen die Profilteile 41, 42 an Anschlägen 31, 32 des Verbinders 30 an. Rechtwinklig an die Profilteile 41, 42 schließen sich an das vertikale Rahmenprofil 40 Anlageflächen 43, 44 an. Diese Anlageflächen 43, 44 kommen an den Führungen 28, 29 der Eckaufnahme 26 zum Liegen. Zur Befestigung der vertikalen Rahmenprofile 40 sind im Bereich der stirnseitigen Enden jeweils eine oder mehrere Schraubaufnahmen 35 eingebracht. Die Schraubaufnahme 35 kann fluchtend zu der Gewindeaufnahme 33 des Verbinders 30 angeordnet werden. Um eine Montagevereinfachung zu erreichen, ist der Abstand vom stirnseitigen Ende des Rahmenprofiles bis zur Bohrungsmitte der Schraubaufnahme 35 auf den Abstand der Aufstandsfläche 27 zu der Gewindeaufnahme 33 abgestimmt. Durch die Schraubaufnahme 35 kann eine Befestigungsschraube 34 hindurchgeführt und in die Gewindeaufnahme 33 des Verbinders 30 eingeschraubt werden. Hierdurch verspannen sich die Profilteile 41, 42 an den Anschlägen 31 und 32 des Verbinders 30. Gleichzeitig wird das vertikale Rahmenprofil 40 an den Führungen 28, 29 in die Eckaufnahme 26 eingezogen. Das Rahmenprofil 40 ist in seiner End-Montage-Stellung fest an den Verbinder 30 angeschlossen und exakt vertikal ausgerichtet.

Die Zeichnung verdeutlicht, daß das vertikale Rahmenprofil von der Außenseite des Rahmengestelles her in die Eckaufnahme 26 eingesetzt werden kann. Die vertikalen Rahmenprofile können also auch bei fertig montiertem Rahmengestell noch nachträglich abgebaut bzw. angebaut werden. Dies hat den entscheidenden Vorteil, daß der Innenraum des Rahmengestelles leicht zugänglich gemacht werden kann. Beispielsweise kann eine selbständig stellfähige Einheit aus Boden- und Deckrahmen 10 und 20 und den beiden hinteren vertikalen Rahmenprofilen 40 aufgebaut werden. Dieses selbständig stellfähige Teil-Rahmengestell kann nun mit elektronischen Einbauten oder dgl. bestückt werden. Anschließend lassen sich die beiden vorderen vertikalen Rahmenprofile 40 anbauen, so daß das Rahmengestell komplettiert ist. Um den Innenraum des Rahmengestelles vor Umwelteinwirkungen zu schützen, werden dann üblicherweise die offenen Seiten des Rahmengestelles mit Seitenwänden und einem Deckel verkleidet. Frontseitig ist eine Tür anscharniert.

## Patentansprüche

1. Schaltschrank mit einem Rahmengestell, das einen Boden- und einen Deckrahmen (20 und 10) mit horizontalen Breiten- und Tiefenstreben (22 und 21) aufweist, wobei der Boden- und der Deckrahmen (20 und 10) Eckaufnahmen aufweist, an die vertikale Rahmenprofile (40) anschließbar sind, und wobei die vertikalen Rahmenprofile (40) zum Innenraum des Rahmengestells gekehrte Profilteile (41, 42) aufweisen, wobei die vertikalen Rahmenprofile (40) zumindest einer Seite des Rahmengestell an ihren Enden mit ihren Profilteilen (41, 42) in die Eckaufnahmen von der Außenseite des Rahmengestells her einschiebbar sind, und wobei die Profilteile (41, 42) an einen Verbinder (30) der Eckaufnahme fixierbar sind,
**dadurch gekennzeichnet,**
**dass** die Profilteile (41, 42) an dem Verbinder (30) angelegt sind,
**dass** die vertikalen Rahmenprofile (40) mit ihren flächig ausgebildeten Profilteilen (41,42) eine zum Innenraum des Rahmengestells hinweisende, offene Außenaufnahme zur Aufnahme des Verbinders (30) aufweist,
**dass** der Deck- und Bodenrahmen (10 und 20) in ihren zur Außenseite des Rahmengestells hin offenen Eckaufnahmen (26) die Verbinder (30) tragen, und
**dass** die Verbinder (30) zur Außenseite des Rahmengestelles weisende Anschläge (31, 32) aufweisen, an denen die flächig ausgebildeten Profilteile (41, 42) der vertikalen Rahmenprofile (40) angelegt sind.

2. Schaltschrank nach Anspruch 1,
**dadurch gekennzeichnet,**
**dass** die vertikalen Rahmenprofile (40) auswechselbar mit den Verbindern (30) verbunden sind.

3. Schaltschrank nach Anspruch 2,
**dadurch gekennzeichnet,**
**dass** die vertikalen Rahmenprofile (40) an ihren Enden mit einer oder mehreren Schraubenaufnahmen (35) versehen sind, die fluchtend zu Gewindeaufnahmen (33) des Verbinders (30) angeordnet sind, und
**dass** in die von der Außenseite des Rahmengestells her zugänglichen Schraubenaufnahmen (35) Befestigungsschrauben (34) einführbar und in die Gewindeaufnahmen (33) einschraubbar sind.

4. Schaltschrank nach einem der Ansprüche 1 bis 3,
**dadurch gekennzeichnet,**
**dass** die Verbinder (30) über den Deck- bzw. den Bodenrahmen (10, 20) in axialer Richtung der vertikalen Rahmenprofile (409 vorstehen und die vertikalen Rahmenprofile (40) von der Stirnseite bis zum freien Ende des Verbinders abstützen.

5. Schaltschrank nach einem der Ansprüche 1 bis 4,
**dadurch gekennzeichnet,**
**dass** die Eckaufnahme (269 eine ebene Aufstandsfläche (27) aufweist, auf der der Verbinder (30) und das stirnseitige Ende des vertikalen Rahmenprofiles (40) aufgestellt sind.

## Claims

1. Switch cabinet with a framework which has a base frame and a top frame (20 and 10) with horizontal width and depth struts (22 and 21) it being the case that the base frame and top frame (20 and 10) have corner mounts to which the vertical frame profiles (40) can be connected, and it being the case that the vertical frame profiles (40) have profile parts (41, 42) which are directed towards the interior of the framework, it being possible for the vertical frame profiles (40) of at least one side of the framework to be pushed at their ends, by way of their profile parts (41, 42), into the corner mounts from the outside of the framework, and it being the case that the profile parts (41, 42) can be fixed to a connector (30) of the corner mount, **characterized in that** the profile parts (41, 42) are positioned on the connector (30), **in that** the vertical frame profiles (40), by way of their planar profile parts (41, 42), have an open outer mount which is oriented towards the interior of the framework and is intended for accommodating the connector (30), **in that** the top frame and base frame (10 and 20) bear the connectors (30) in their corner mounts (26), which are open in the direction of the outside of the framework, and **in that** the connectors (30) have stops (31, 32) which are oriented towards the outside of the framework and on which the planar profile parts (41, 42) of the vertical frame profiles (40.) are positioned.

2. Switch cabinet according to Claim 1, **characterized in that** the vertical frame profiles (40) are connected in an exchangeable manner to the connectors (30).

3. Switch cabinet according to Claim 2, **characterized in that** the vertical frame profiles (40) are provided, at their ends, with one or more screw mounts (35) which are arranged in alignment with threaded mounts (33) of the connector (30), and **in that** fastening screws (34) can be introduced into the screw mounts (35), accessible from the outside of the framework, and can be screwed into the threaded mounts (33).

4. Switch cabinet according to one of Claims 1 to 3, **characterized in that** the connectors (30) project beyond the top frame and the base frame (10, 20) in the axial direction of the vertical frame profiles (40) and support the vertical frame profiles (40) from the end side to the free end of the connector.

5. Switch cabinet according to one of Claims 1 to 4, **characterized in that** the corner mount (26) has a planar standing surface (27) on which the connector (30) and the end of the vertical frame profile (40) are positioned in an upright state.

## Revendications

1. Armoire de distribution avec une baie, qui présente un cadre de base et un cadre de plafond (20 et 10) avec des entretoises horizontales de largeur et de profondeur (22 et 21), dans laquelle le cadre de base et le cadre de plafond (20 et 10) présentent des logements d'angle, auxquels les montants profilés verticaux (40) peuvent se raccorder, et dans laquelle les montants profilés verticaux (40) présentent des parties profilées (41, 42) tournées vers l'espace intérieur de la baie, dans laquelle les montants profilés verticaux (40) d'au moins un côté de la baie peuvent être, par le côté extérieur de la baie, insérés à leurs extrémités par leurs parties profilées (41, 42) dans les logements d'angle, et dans laquelle les parties profilées (41, 42) peuvent être fixées à un élément d'assemblage (30) du logement d'angle, **caractérisée en ce que** les parties profilées (41, 42) sont posées sur l'élément d'assemblage (30), **en ce que** les montants profilés verticaux (40) présentent, avec leurs parties profilées de configuration plate (41, 42), un logement extérieur tourné vers l'espace intérieur de la baie, destiné à recevoir l'élément d'assemblage (30), **en ce que** le cadre de plafond et le cadre de base (10 et 20) portent les éléments d'assemblage (30) dans leurs logements d'angle (26) ouverts en direction du côté extérieur de la baie, et **en ce que** les éléments d'assemblage (30) présentent des butées (31, 32) orientées vers le côté extérieur de la baie, contre lesquelles les parties profilées de configuration plate (41, 42) des montants profilés verticaux (40) sont posées.

2. Armoire de distribution suivant la revendication 1, **caractérisée en ce que** les montants profilés verticaux (40) sont assemblés de façon interchangeable avec les éléments d'assemblage (30).

3. Armoire de distribution suivant la revendication 2, **caractérisée en ce que** les montants profilés verticaux (40) sont pourvus, à leurs extrémités, d'un ou de plusieurs logements de vis (35), qui sont disposés en alignement avec des logements filetés (33) de l'élément d'assemblage (30), et **en ce que** des vis de fixation (34) peuvent être introduites dans les logements de vis (35) accessibles par le côté extérieur de la baie et vissées dans les logements filetés (33).

4. Armoire de distribution suivant l'une quelconque des revendications 1 à 3, **caractérisée en ce que** les éléments d'assemblage (30) sont en saillie sur le cadre de plafond, respectivement le cadre de base (10, 20) en direction axiale des montants profilés verticaux (40) et soutiennent les montants profilés verticaux (40) depuis la face d'extrémité jusqu'à l'extrémité libre de l'élément d'assemblage.

5. Armoire de distribution suivant l'une quelconque des revendications 1 à 4, **caractérisée en ce que** le logement d'angle (26) présente une face de dressage plane (27), sur laquelle l'élément d'assemblage (30) et l'extrémité frontale du montant profilé vertical (40) sont posés.
